(19) **Europäisches Patentamt · European Patent Office · Office européen des brevets**

(11) **EP 3 108 223 B1**

(12) **FASCICULE DE BREVET EUROPEEN**

(45) Date de publication et mention
de la délivrance du brevet:
**26.04.2023 Bulletin 2023/17**

(21) Numéro de dépôt: **15709290.9**

(22) Date de dépôt: **20.02.2015**

(51) Classification Internationale des Brevets (IPC):
**G01N 27/18** *(2006.01)* **A24F 40/50** *(2020.01)*

(52) Classification Coopérative des Brevets (CPC):
**A24F 40/50; G01N 27/18**

(86) Numéro de dépôt international:
**PCT/FR2015/050416**

(87) Numéro de publication internationale:
**WO 2015/124878 (27.08.2015 Gazette 2015/34)**

(54) **CIGARETTE ELECTRONIQUE**

**ELEKTRONISCHE ZIGARETTE**

**ELECTRONIC CIGARETTE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.02.2014 FR 1451409**

(43) Date de publication de la demande:
**28.12.2016 Bulletin 2016/52**

(60) Demande divisionnaire:
**22306036.9 / 4 104 691**

(73) Titulaire: **JT International SA**
**1202 Geneva (CH)**

(72) Inventeurs:
- **LOUVEAU, Eric**
  **F-06600 Antibes (FR)**
- **MALCAVET, Didier**
  **F-83390 Puget-Ville (FR)**
- **ANAVI, Steve**
  **F-75009 Paris (FR)**
- **PROT, Alexandre**
  **F-75002 Paris (FR)**

(74) Mandataire: **Lavoix**
**2, place d'Estienne d'Orves**
**75441 Paris Cedex 09 (FR)**

(56) Documents cités:
**EP-A1- 2 143 346      EP-A1- 2 468 116**
**EP-A2- 0 430 566      WO-A1-2013/060781**
**WO-A2-2013/098398     US-A- 6 040 560**

EP 3 108 223 B1

**Description**

Arrière-plan de l'invention

L'invention se situe dans le domaine général des cigarettes électroniques comportant un élément chauffant apte à vaporiser un substrat en réponse aux inhalations de l'utilisateur, lorsque l'élément chauffant est alimenté.

Plus précisément, l'invention propose une solution pour permettre d'estimer la quantité de substrat vaporisée par l'élément chauffant.

On connaît des solutions qui visent à estimer cette quantité en mesurant la variation de la résistivité de l'élément chauffant lorsque la température de cet élément chauffant varie en raison des inhalations.

Le document EP 2 468 116 décrit en particulier une solution de ce type dans laquelle la résistivité d'un élément chauffant est calculée à partir de la différence de potentiels aux bornes de cet élément.

Le document EP 2 143 346 A1 décrit en particulier un système de capteur d'écoulement pour détecter l'écoulement d'un fluide indiquant une bouffée dans un système générateur d'aérosol.

Malheureusement, la variation de la résistivité de l'élément chauffant est très difficile à mesurer de sorte que ces solutions ne permettent pas d'estimer la quantité de substrat vaporisée de façon précise.

Objet et résumé de l'invention

Selon un premier aspect, l'invention concerne un procédé pour estimer la quantité de substrat vaporisée par un élément chauffant dans une cigarette électronique pendant une période de fumage.

Dans ce document, la notion de « vaporisation » est à prendre au sens large ; elle désigne la transformation du substrat en gaz, y compris à une température inférieure à 100°C.

Ce procédé comporte les étapes de la revendication 1.

Corrélativement, l'invention concerne une cigarette électronique comportant les caractéristiques de la revendication 5.

Ainsi, et d'une façon générale, l'invention propose d'estimer la quantité de substrat vaporisé pendant une période de fumage, en comparant les caractéristiques de la tension aux bornes de l'élément chauffant, avec ces caractéristiques en l'absence d'inhalation. Mais de façon très avantageuse, l'invention ne mesure pas directement ces caractéristiques mais des estimations aux bornes d'un circuit dont les caractéristiques intrinsèques ne sont pas perturbées par les inhalations.

Grâce à cette caractéristique particulièrement avantageuse, l'invention permet d'estimer de façon très fiable l'intensité de ces inhalations, et donc d'améliorer considérablement l'estimation de la quantité de substrat vaporisée.

De façon très avantageuse, le circuit précité, aux bornes duquel on réalise les mesures pour estimer les caractéristiques de la tension aux bornes de l'élément chauffant, ne comporte lui-même aucun élément chauffant. Cette caractéristique permet avantageusement de limiter la puissance consommée pour la détection de la quantité de substrat vaporisée, de sorte qu'une très large majorité de la puissance totale consommée par la cigarette électronique est utilisée pour vaporiser le substrat. Le dispositif de l'invention pour mesurer la quantité de substrat vaporisée par une cigarette électronique ne présente donc pas les inconvénients du dispositif décrit dans le document EP 2 143 346.

Dans un mode de réalisation de l'invention, la quantité déterminée de substrat vaporisée est utilisée pour estimer la quantité ou la qualité de composants inhalés par l'utilisateur, par exemple une quantité de nicotine.

Dans une première variante de réalisation de l'invention, on estime la variation de la tension aux bornes de l'élément chauffant.

Dans un premier mode de réalisation de cette première variante, on calcule une approximation de la variation de la tension aux bornes de l'élément chauffant à partir de tensions mesurées aux bornes d'au moins deux éléments, les tensions aux bornes de chacun de ces éléments donnant une approximation de la tension aux bornes de l'élément chauffant à des instants légèrement décalés dans le temps.

Dans ce mode de réalisation de l'invention, la cigarette électronique selon l'invention comporte :

- au moins deux éléments, la tension aux bornes de chacun desdits éléments donnant une approximation de la tension aux bornes dudit élément chauffant à des instants légèrement décalés dans le temps, et

- des moyens pour mesurer une approximation de la variation de la tension aux bornes de l'élément chauffant à partir des tensions mesurées aux bornes desdits éléments.

L'invention permet de suivre l'évolution dans le temps des caractéristiques de la tension aux bornes de l'élément chauffant, non pas à l'aide d'un outil qui suivrait précisément et directement en temps réel cette tension, mais en créant un retard artificiel delta entre deux éléments de la cigarette électronique, ce retard permettant d'obtenir à un instant t une estimation de l'évolution de la tension aux bornes des moyens de chauffage entre l'instant t-delta et l'instant t.

Dans un mode de réalisation, ces éléments sont des circuits RC série connectés en série.

Dans un deuxième mode de réalisation de cette première variante, l'approximation de la variation de la tension aux bornes de l'élément chauffant est la dérivée par rapport au temps d'une différence de potentiels mesurée aux bornes d'une résistance de mesure connectée en série avec l'élément chauffant.

Dans une deuxième variante de réalisation de l'invention, on estime la tension aux bornes de l'élément chauffant.

Dans un mode de réalisation de cette deuxième variante, l'approximation de la tension aux bornes de l'élément chauffant est la tension mesurée aux bornes d'une résistance de mesure connectée en série avec ledit élément chauffant.

Dans ce mode de réalisation, la cigarette électronique comporte des moyens aptes à mesurer une différence de potentiel aux bornes d'une résistance de mesure connectée en série avec l'élément chauffant, et des moyens pour mesurer une approximation de la variation de la tension aux bornes de l'élément chauffant à partir de ladite différence de potentiels.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur ces figures :

- la figure 1 représente un premier mode de réalisation d'une cigarette électronique conforme à l'invention en option A ;

- la figure 2 représente la variation de tension aux bornes de différents composants de la cigarette électronique de la figure 1 suite à une inhalation ;

- la figure 3 représente la différence théorique entre les tensions de sortie de deux circuits RC de la figure 1, en l'absence d'inhalation ;

- la figure 4 illustre une méthode pour calculer une intensité d'inhalation dans la cigarette électronique de la figure 1

- la figure 5 représente des détails d'une cigarette électronique conforme à un deuxième mode de réalisation de l'invention en option A ;

- la figure 6 représente des détails d'une cigarette électronique conforme au premier mode de réalisation en option B;

- la figure 7 illustre une méthode pour calculer une intensité d'inhalation dans la cigarette électronique de la figure 6 ; et

- la figure 8 représente des détails d'une cigarette électronique conforme à un troisième mode de réalisation en option A;

- la figure 9 représente, sous forme d'organigramme, les principales étapes d'un procédé d'estimation conforme à un mode particulier de réalisation de l'invention.

Description détaillée d'un premier mode de réalisation de l'invention en option A

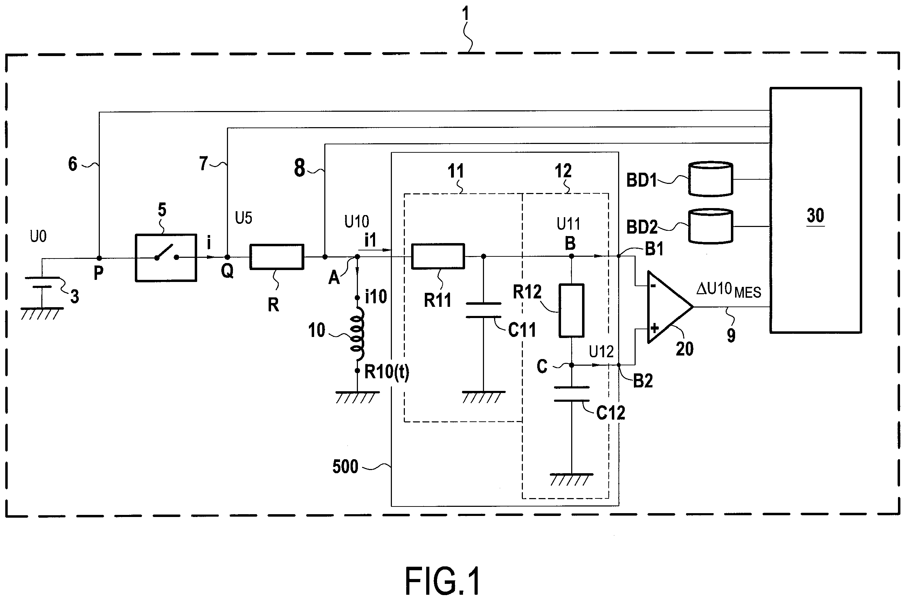

Nous allons maintenant décrire en référence à la figure 1 un premier mode de réalisation d'une cigarette électronique 1 conforme à l'invention, figure dans laquelle seuls les composants électroniques utiles à la compréhension de ce mode de réalisation ont été représentés.

La cigarette électronique 1 comporte un élément chauffant 10 apte à vaporiser un substrat, la résistivité $R10(t)$ de cet élément chauffant étant susceptible de varier en fonction de sa température.

Dans ce mode de réalisation, l'élément chauffant 10 comporte une première borne non référencée reliée à la masse et une deuxième borne A, de sorte que le potentiel $U10$ de cette borne correspond à la tension aux bornes de l'élément chauffant 10.

Conformément à l'invention, la cigarette électronique 1 comporte une batterie 3 apte à délivrer une tension $U0$, et un interrupteur 5 connecté à une borne P de la batterie, pour alimenter, uniquement lorsque l'utilisateur appuie sur un bouton non représenté, l'élément chauffant 10 à partir de la batterie 3.

Dans le mode de réalisation décrit ici, la tension $U0$ présente une tension nominale de l'ordre de 3.7V et une courbe de décharge dans une plage [4.2V, 0V].

Lorsque l'interrupteur 5 est en position fermée, un courant électrique d'intensité i traverse cet interrupteur et un courant électrique d'intensité i10 traverse l'élément chauffant 10.

De manière à pouvoir mesurer les variations de la tension U10(t) aux bornes de l'élément chauffant 10, la cigarette électronique 1 comporte, dans ce mode de réalisation, une résistance de mesure R placée en série entre une borne Q de l'interrupteur 5 et la borne A de l'élément chauffant 10. La résistance de mesure est traversée par le courant électrique d'intensité i lorsque l'interrupteur 5 est en position fermée. Les caractéristiques intrinsèques de la résistance de mesure R ne sont pas perturbées par les inhalations.

Du fait de cet agencement particulier, et en considérant que l'interrupteur 5 est un interrupteur parfait (c'est-à-dire sans perte, donc avec U5 = U0), on obtient, de façon connue :

$$U10(t) = U0.R10(t)/(R+R10(t)) \qquad (1)$$

Par conséquent, les variations de la résistivité R10(t) de l'élément chauffant 10 s'accompagnent d'une variation de la tension U10(t) aux bornes de l'élément chauffant.

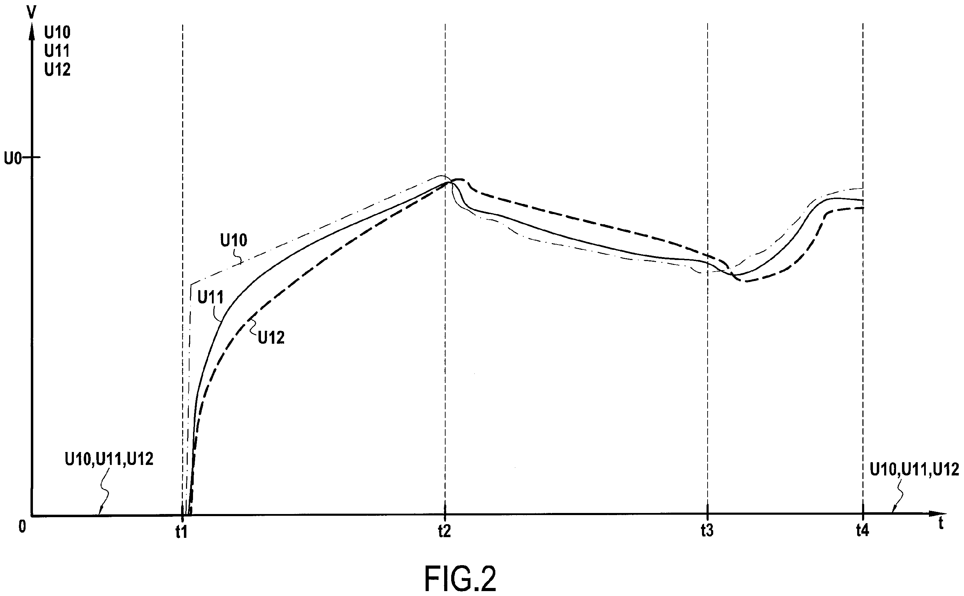

La figure 2 représente en ordonnée la tension U10(t) aux bornes de l'élément chauffant 10 en fonction du temps, figure sur laquelle quatre événements se produisant à des instants t1 à t4 ont été représentés :

-   t1 : appui sur le bouton fermant l'interrupteur 5. La tension U10(t) aux bornes de l'élément chauffant 10 qui était nulle, atteint presque instantanément une tension très proche de la tension U0 de la batterie 3. A partir, de cet instant t1 et tant que l'utilisateur n'inhale pas, la température de l'élément chauffant 10 augmente jusqu'à atteindre une température limite, sa résistivité R10(t) augmente et la tension U10(t) augmente.

-   t2 et t3 : début et arrêt de l'inhalation. L'inhalation amène un flux d'air froid sur l'élément chauffant 10 avec pour effet de baisser sa température, diminuer sa résistivité R10(t) et donc de baisser la tension U10(t) à ses bornes. Inversement, la fin de l'inhalation entraîne, si l'interrupteur 5 est maintenu fermé, un réchauffement de l'élément chauffant, et une augmentation de la tension à ses bornes.

-   t4 : relâche du bouton et ouverture de l'interrupteur 5 : l'élément chauffant 10 n'est plus alimenté par la batterie 3 et la tension U10(t) à ses bornes redevient nulle presque instantanément.

Dans ce document, on appelle « période de fumage », la période de temps entre les instants t1 et t4, à savoir la période au cours de laquelle l'utilisateur appuie sur le bouton commandant l'interrupteur 5 en position fermée. Pendant cette période, l'utilisateur peut éventuellement ne pas inhaler ou inhaler une ou plusieurs bouffées.

Dans ce premier mode particulier de réalisation de l'invention, on estime la quantité de substrat vaporisée pendant une période de fumage en comparant une mesure $\Delta U10_{mes}(t)$ d'une approximation de la variation de la tension U10(t) aux bornes de l'élément chauffant 10 pendant cette période de fumage avec une estimation théorique $\Delta U10_{TH}(t)$ de cette approximation de cette variation de tension en l'absence de toute inhalation pendant la période de fumage.

Plus précisément, dans ce mode de réalisation de l'invention, on choisit, comme approximation de la variation de tension à l'instant t aux bornes de l'élément chauffant 10, la différence entre deux tensions U11(t) et U12(t) mesurées aux bornes B1, B2 d'un circuit 500 comprenant deux sous-circuits 11,12 distincts et de même type, les tensions U11(t) et U12(t) aux bornes de ce circuit 500 étant des approximations de la tension U10(t) aux bornes de l'élément chauffant 10 à deux instants légèrement décalés dans le temps.

Il est fondamental de constater qu'aucun des composants du circuit 500 n'a de caractéristique intrinsèque perturbée par les inhalations.

Dans le mode de réalisation décrit ici, on utilise deux sous-circuits RC série 11,12, placés en série entre l'élément chauffant 10 et des moyens 30 de calcul aptes à calculer la différence entre les tensions U11(t) et U12(t).

Dans le mode de réalisation décrit ici, les tensions U11(t) et U12(t) sont les potentiels des points B et C représentés à la figure 1.

La constante de temps T12 du deuxième circuit RC 12 est choisie largement supérieure à celle T11 du premier circuit RC 11, par exemple d'un facteur 100.

Dans le mode de réalisation décrit ici, on utilise un amplificateur 20 de gain G pour amplifier la différence $\Delta U10(t)$ entre U11(t) et U12(t).

Dans le mode de réalisation décrit ici, les résistances R11 et R12 des sous-circuits RC 11 et 12 sont négligeables par rapport à l'impédance de l'amplificateur 20.

Par conséquent,

$$\Delta U10(t) = G.(U12(t) - U11(t))$$

Dans le mode de réalisation décrit ici :

- le gain G est choisi dans la plage [100 ; 10000], par exemple égal à 500 ;

- la différence U12(t) - U11(t) est de l'ordre de quelques dizaines de microvolts ; et

- ΔU10(t) est de l'ordre de quelques dizaines voire centaines de microvolts et mesurable par les moyens de calcul 30.

Sur la figure 2, on a également représenté les tensions de sortie U11(t) et U12(t) des sous-circuits RC série 11 et 12.

Comme expliqué précédemment, lorsque l'utilisateur appuie sur le bouton à l'instant t1, l'élément chauffant 10 est alimenté et la tension U10(t) à ses bornes augmente. Les deux capacités C11, C12 des sous-circuits RC 11, 12 se chargent, la deuxième et plus importante capacité C12 étant en retard par rapport à la première et plus petite capacité 11. On observe par conséquent, entre l'appui sur le bouton (t1) et le début de l'inhalation (t2) que U12(t)<U11(t)<U10(t).

Lorsque l'utilisateur commence à inhaler à l'instant t2, l'élément chauffant 10 se refroidit et la tension U10(t) à ses bornes diminue. La deuxième et plus importante capacité C12, est en retard par rapport à la première et plus petite capacité C11. On observe pendant toute la durée de l'inhalation, à savoir entre t2 et t3 que U12(t)>U11(t)>U10(t).

Lorsque l'utilisateur arrête d'inhaler à l'instant t3, l'élément chauffant 10 se réchauffe et la tension U10(t) à ses bornes augmente. On retrouve alors la situation dans laquelle U12(t)<U11(t)<U10(t).

Peu de temps après que l'utilisateur relâche le bouton à l'instant t4, la tension U10(t) redevient nulle, les capacités C11 et C12 se déchargent et leurs tensions de sortie U11(t), U12(t) redeviennent nulles.

De façon connue, on distingue, lorsqu'on applique une tension constante aux bornes d'une capacité, un régime transitoire au cours duquel la capacité se charge progressivement jusqu'à atteindre une charge limite fonction de sa valeur et un régime permanent durant lequel la charge de la capacité reste à cette valeur limite tant que l'on continue à lui appliquer cette tension constante.

La figure 2 correspond à la situation dans laquelle l'utilisateur commence à inhaler (instant t2) en régime permanent. L'homme du métier comprendra que si l'utilisateur commençait à inhaler pendant le régime transitoire, la grande capacité C12 n'étant pas entièrement chargée, la tension de sortie U12(t) de la deuxième capacité ne deviendrait pas nécessairement supérieure à la tension de sortie U11(t) de la première capacité.

Dans le mode de réalisation décrit ici, le système formé par les deux sous-circuits 11 et 12 est en régime transitoire pendant environ 800 ms après l'instant t1 auquel l'utilisateur appuie sur le bouton.

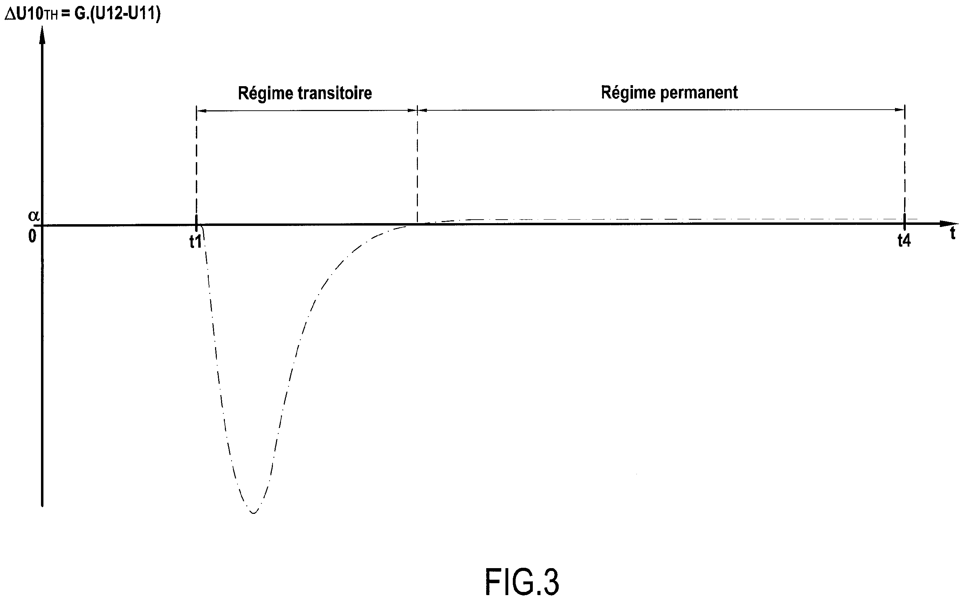

La figure 3, qui représente la différence $\Delta U10_{TH}(t)$ théorique entre les tensions de sortie U11(t) et U12(t) des deux sous-circuits RC 11, 12 en l'absence d'inhalation, autrement dit une approximation théorique de la variation de la tension U10(t) aux bornes de l'élément chauffant 10 à l'instant t, illustre ces différents régimes.

Pendant le régime transitoire, U12(t) est toujours inférieure à U11(t) mais comme représenté à la figure 2 la valeur absolue de la différence entre ces deux tensions augmente puis diminue jusqu'à atteindre une valeur constante α en régime permanent.

Dans le mode de réalisation décrit ici, cette constante α peut être négligée et supposée nulle par la suite.

En régime transitoire, et en notant :

- R11, la résistance du premier sous-circuit RC série 11 ;

- C11, la capacité du premier sous-circuit RC série 11 ;

- R12, la résistance du deuxième sous-circuit RC série 12 ;

- C12, la capacité du deuxième sous-circuit RC série 12 ;

- T11 la constante de temps R1.C1 du premier sous-circuit RC série 11 ; et

- T12 la constante de temps R2.C2 du deuxième sous-circuit RC série 12 ;

on obtient, de façon théorique :

$$U11_{TH}(t) = U10(t).(1 - \exp(-t/T11))$$

$$U12_{TH}(t) = U11_{TH}(t).(1- exp(-t/T12))$$

$$soit \ U12_{TH}(t) = U10(t).(1 - exp(-t/T11)).(I - exp(-t/T12))$$

Par conséquent, la variation théorique $\Delta U10_{TH}(t)$ de la tension aux bornes de l'élément chauffant 10 s'exprime :

$$\Delta U10_{TH}(t) = G.(U11_{TH}(t) - U12_{TH}(t))$$

$$soit \ \Delta U10_{TH}(t) = G.U10(t).(1 - exp(-t/T11)).(exp(-t/T12))$$

ou encore avec (1)

$$\Delta U10_{TH}(t)= G.[U0.R10(t)/(R+R10(t))].(1-exp(-t/T11))-(exp(-t/T12))$$

En faisant l'approximation que R10(t) est constant pendant la période de fumage et égal à R10(t1), on obtient finalement l'expression de $\Delta U10_{TH}(t)$ :

- en régime transitoire :

$$\Delta U10_{TH}(t) = G.[U0.R10(t1)/(R+R10(t1))].(1 - exp(-t/T11)).(exp(-t/T12)) \quad (2)$$

- en régime permanent :

$$\Delta U10_{TH}(t) = \alpha = 0.$$

Dans le mode de réalisation de la figure 1, l'approximation $\Delta U10_{MES}(t)$ de la variation de la tension U10(t) aux bornes de l'élément chauffant 10 est la tension de sortie des moyens d'amplification 20, à savoir le potentiel de la borne 9.

Dans le mode de réalisation décrit ici, la quantité de substrat vaporisée pendant une période de fumage est estimée à partir d'une intensité d'inhalation F calculée par intégration de la différence au cours d'une période de fumage, entre l'approximation $\Delta U10_{MES}(t)$ de la variation de la tension U10(t) aux bornes de l'élément chauffant 10 pendant cette période de fumage et l'estimation théorique $\Delta U10_{TH}(t)$ de cette approximation de cette variation de tension en l'absence de toute inhalation pendant la période de fumage.

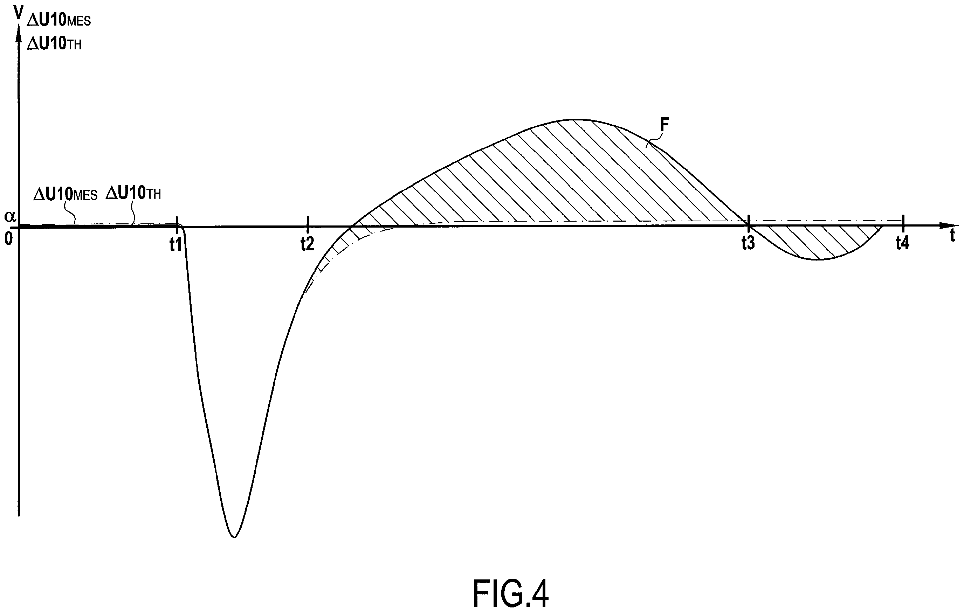

Cette intensité d'inhalation F correspond, dans l'exemple de réalisation décrit ici, à l'aire hachurée Figure 4. Cette aire peut notamment être calculée par une somme de Riemann avec un pas de 20ms entre les instants t2 et t4.

Dans l'exemple de réalisation décrit ici, t2 est déterminé comme étant l'instant où la valeur absolue de la différence $\Delta U10_{MES}(t)$ et $\Delta U10_{TH}(t)$ devient supérieure à un seuil ST2 prédéterminé:

$$|\Delta U10_{MES}(t2) - \Delta U10_{TH}(t2)| > S_{T2}$$

L'instant t4 est l'instant où l'utilisateur relâche le bouton.

Pour calculer l'intensité d'inhalation F par la méthode de Riemann, on évalue et on mémorise $\Delta U10_{MES}(t)$ et $\Delta U10_{TH}(t)$, à différents instants entre t1 et t4, par exemple toutes les 20ms. Dans ce mode de réalisation :

1. $\Delta U10_{MES}(t)$ est la mesure du potentiel de la borne 9 à l'instant t

2. $\Delta \ \Delta U10_{TH}(t)$ entre t1 et t1+800ms (régime transitoire) est lue dans un enregistrement d'une première base de données BD1 construite lors de tests préliminaires effectuées en laboratoire et mémorisée dans la cigarette électronique 1, l'enregistrement étant sélectionné en fonction des paramètres de l'équation (2).

3. $\Delta U10_{TH}(t)= 0$, entre t1+800ms et t4 (régime permanent)

De retour à l'équation (2), l'expression de $\Delta U10_{TH}(t)$ en régime transitoire dépend de six paramètres, à savoir :

- le gain G de l'amplificateur 20 ;
- la tension U0 délivrée par la batterie 3 ;
- la résistivité R10(t1) de l'élément chauffant supposée constante ;
- la valeur de la résistance de mesure R ;
- les constantes de temps T11 et T12 des sous-circuits RC 11 et 12.

Dans le mode de réalisation décrit ici, et de retour à la figure 1, les moyens de calcul 30 sont aptes à mesurer la tension U0 à la borne P de la batterie 3 au moyen d'une sonde de tension 6.

Dans le mode de réalisation décrit ici, les moyens de calcul 30 sont également aptes à estimer la résistivité R10(t1) de l'élément chauffant. Pour cela, les moyens de calcul 30 mesurent, à l'instant t1, les tensions U5 à la borne Q de l'interrupteur 5 au moyen d'une sonde de tension 7 et la tension U10 à la borne A de l'élément chauffant 10 au moyen d'une sonde de tension 8.

En notant i l'intensité du courant électronique qui traverse la résistance R, on obtient par application de la loi des noeuds à la borne A, et de la loi d'Ohm à la résistance R, on obtient i1 + i10 = (U5 - U10)/R.

Or, dans le mode de réalisation décrit ici, il est négligeable devant i10. Par conséquent, par application de la loi d'Ohm à l'élément chauffant 10 :

$$R10 = R.U10/(U5 - U10) \qquad (3)$$

Dans le mode de réalisation de l'invention décrit ici, la première base de données BD1 mémorise, pour une pluralité de six-uplet correspondant aux 6 paramètres {G, U0, R10, R, T11, T12}, des valeurs de la tension théorique $\Delta U10_{TH}(t)$ en l'absence d'inhalation et en régime transitoire à différents instants t comptés entre t1 et t1+800ms.

Les moyens de calcul sont donc en mesure de calculer l'intensité d'inhalation F par la méthode de Riemann.

Dans le mode de réalisation décrit ici, les moyens de calcul 30 interrogent une deuxième base de données BD2 de la cigarette électronique 1 pour déterminer la quantité de substrat vaporisée pendant la période de fumage en fonction de quatre paramètres :

- durée t4 - t1 de la période de fumage ;
- tension U0 de la batterie 3 mesurée par les moyens de calcul 30 ;
- résistance R10(t1) de l'élément chauffant 10, supposée constante au cours d'une période de fumage, et mesurée par les moyens de calcul 30 ; et
- intensité d'inhalation F, calculée ici par la méthode de Riemann.

En variante d'autres paramètres peuvent aussi être utilisés et notamment la température de l'élément chauffant 10 à t1, la viscosité du substrat, la vitesse d'évaporation du substrat, la fonction de transfert de l'élément chauffant 10 caractérisant son refroidissement, la densité de gouttes de substrat vaporisée en fonction de l'intensité d'inhalation F, ...

Dans le mode de réalisation décrit ici, la tension U0 de la batterie 3 est mesurée par les moyens de calcul 30. En variante, cette tension pourrait être considérée constante et égale à la valeur nominale de la batterie.

Description d'un deuxième mode de réalisation de l'invention en option A

Dans le mode de réalisation de la figure 1, on utilise 2 sous-circuits RC série 11, 12 en série et un amplificateur 20 pour estimer la variation de tension $\Delta U10(t)$ aux bornes de l'élément chauffant 10.

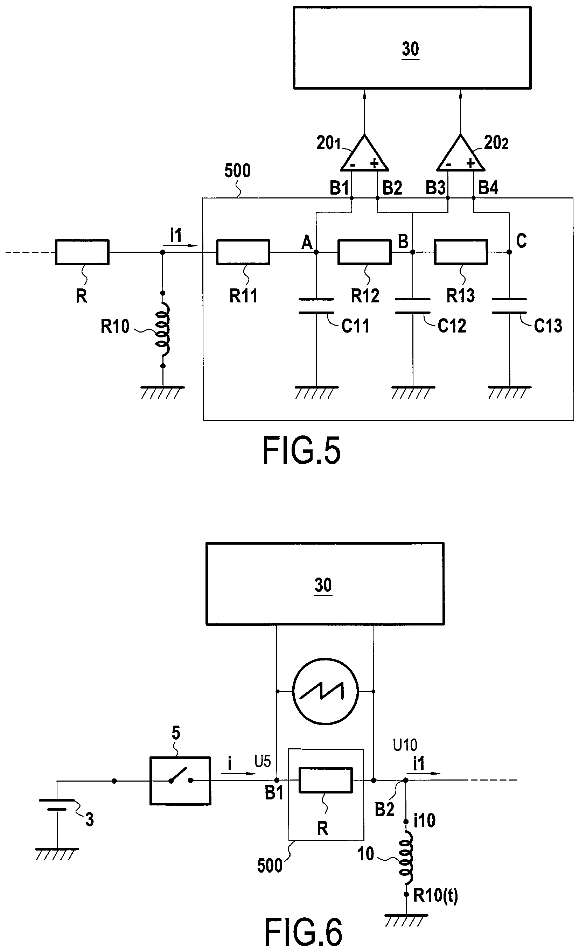

En variante, et comme représenté à la figure 5, on peut par exemple utiliser un circuit 500 comportant trois sous-circuits RC et deux amplificateurs $20_1$, $20_2$.

Dans ce mode de réalisation :

- le premier sous-circuit RC (R11/C11) suit de très près la tension aux bornes de l'élément chauffant R10 et représente une estimation de la tension aux bornes de l'élément chauffant R10(t) à l'instant t de la mesure ;

- le deuxième sous-circuit RC (R12/C12) suit avec un léger retard dt la tension aux bornes de l'élément chauffant R10 et représente une estimation de ce qu'était la tension R10(t-dt) aux bornes de l'élément chauffant R10 à un instant passé t-dt proche de l'instant t de la mesure ;

- le troisième sous-circuit RC (R13/C13) suit avec un retard plus important Dt la tension aux bornes de l'élément chauffant R10 et représente une estimation de ce qu'était la tension R10(t-Dt) aux bornes de l'élément chauffant R10à un instant passé t-Dt plus éloigné de l'instant t de la mesure.

A cet effet, les constantes de temps des trois sous-circuits RC sont choisies de sorte que l'équation ci-dessous soit vérifiée :

$$R11.C11 < R12.C12 < R13.C13 \; ;$$

De plus, pour un suivi plus fin, il peut être plus optimal d'avoir en plus l'équation suivante vérifiée :

$$(R11.C11) / (R12.C12) < (R12.C12) / (R13.C13)$$

Aucun des composants du circuit 500 n'a de caractéristique intrinsèque perturbée par les inhalations.

Dans ce mode de réalisation, le circuit 500 présente quatre bornes B1, B2, B3 et B4.

Comme dans le premier mode de réalisation, la quantité de substrat vaporisée pendant une période de fumage est estimée à partir d'une intensité d'inhalation F calculée par intégration de la différence au cours d'une période de fumage, entre l'approximation de la variation de la tension U10(t) aux bornes de l'élément chauffant 10 pendant cette période de fumage et l'estimation théorique $\Delta U10_{TH}(t)$ de cette approximation de cette variation de tension en l'absence de toute inhalation pendant la période de fumage.

Mais de façon très avantageuse, on réalise dans ce mode de réalisation, deux approximations $\Delta U10^1_{MES}(t)$ et $\Delta U10^2_{MES}(t)$ de la variation de la tension U10(t) aux bornes de l'élément chauffant 10 pendant la période de fumage, la première approximation étant mesurée aux bornes B1 et B2 du circuit 500, la deuxième approximation étant mesurée aux bornes B3 et B4 du circuit 500.

Ce mode de réalisation permet d'améliorer l'estimation des variations de tension aux bornes de l'élément chauffant 10, et ce quelles que soient les caractéristiques de la bouffée.

En effet, grâce au choix des constantes de temps :

- la tension mesurée aux bornes B1 et B2 du circuit 500 est particulièrement représentative de la tension aux bornes de l'élément chauffant R10 pour un certain type d'inhalation, par exemple une inhalation rapide et/ou intense ou saccadée; alors que
- la tension mesurée aux bornes B3 et B4 du circuit 500 est particulièrement représentative de la tension aux bornes de l'élément chauffant R10 pour un autre type d'inhalation, par exemple une inhalation lente et/ou légère ou continue.

On construit alors dans ce mode de réalisation les 2 courbes $\Delta U10_{MES}(t)$ et $\Delta U10_{TH}(t)$ suivantes :

$$\Delta U10_{MES}(t) = K1 \, \Delta U10^1_{MES}(t) + K2 \, \Delta U10^2_{MES}(t)$$

$$\Delta U10_{TH}(t) = K1 \, \Delta U10^1_{TH}(t) + K2 \, \Delta U10^2_{TH}(t)$$

dans lesquelles $\Delta U10^1_{TH}(t)$ et $\Delta U10^2_{TH}(t)$ sont des estimations théoriques des approximations $\Delta U10^1_{MES}(t)$ et $\Delta U10^2_{MES}(t)$ en l'absence de toute inhalation pendant la période de fumage.

On retient alors, pour calculer l'intensité F de l'inhalation, l'aire entre ces deux courbes $\Delta U10_{MES}$ et $\Delta U10_{TH}$.

Les coefficients K1 et K2 sont fixes et déterminés en fonction des constantes de temps des circuits RC (les valeurs R11.C11, R12.C12 et R13.C13).

De façon non limitative, ce couple de coefficients pourrait être choisi conformément à l'un des quatre exemples suivants :

Exemple 1 :

$$K1 = 1/2 \; ;$$

$$K2 = 1/2$$

Exemple 2 :

$$K1 = (R11.C11+R12.C12)/(R11.C11+2.R12.C12+R13.C13) ;$$

$$K2 = (R12.C12+R13.C13)/(R11.C11+2.R12.C12+R13.C13)$$

Exemple 3 :

$$K1 = R12.C12/(R11.C11) / ((R12.C12)/(R11.C11) + (R13.C13)/(R12.C12))$$

$$K2 = R13.C13/(R12.C12) / ((R12.C12)/(R11.C11) + (R13.C13)/(R12.C12))$$

Exemple 4 :

$$K1 = (R12.C12-R11.C11) / (R13.C13-R11.C11) ;$$

$$K2 = (R13.C13-R12.C12) / (R13.C13-R11.C11)$$

Pour s'assurer une bonne exploitation, ces coefficients peuvent testés/validés en laboratoire.

Description d'un premier mode de réalisation de l'invention en option B

Dans le mode de réalisation de la figure 6, la grandeur de la tension aux bornes de l'élément chauffant que l'on estime n'est pas la variation $\Delta U10(t)$ de cette tension mais la valeur $U10(t)$ de cette tension elle-même.
Dans ce mode de réalisation de l'invention, on estime cette valeur $U10(t)$ en mesurant la tension $U5 - U10$ aux bornes B1 et B2 d'un circuit 500 constitué dans cet exemple par la résistance de mesure R.
En effet, en reprenant l'équation (3) :

$$U10(t) = R10 / R . (U5 - U10) (t) \qquad (4)$$

Ce mode de réalisation nécessite de connecter des moyens de calcul 30 aux bornes B1 et B2 de la résistance de mesure R pour mesurer précisément les variations de U5-U10.

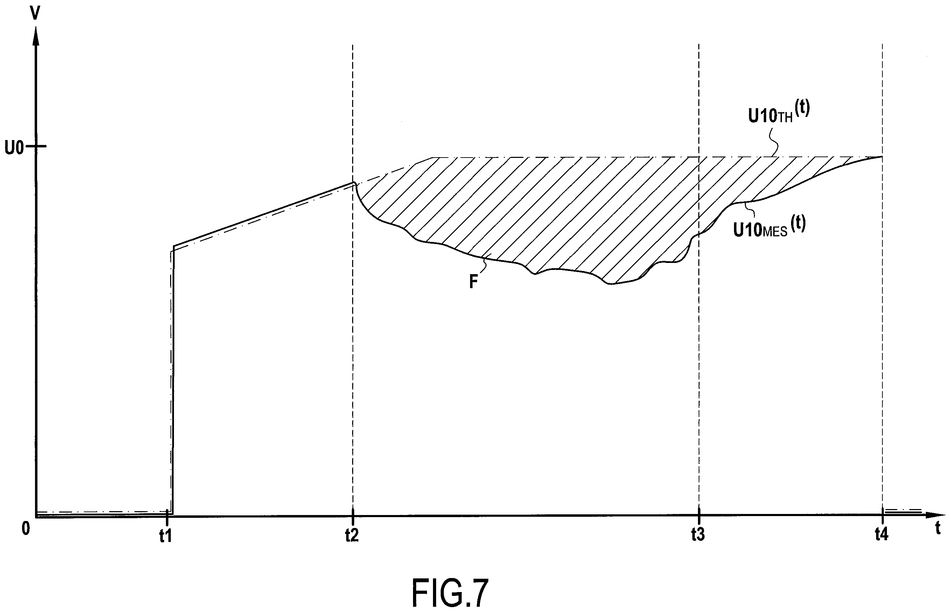

La figure 7 représente :

- l'approximation $U10_{MES}(t)$ de la tension $U10(t)$ aux bornes de l'élément chauffant 10 pendant la période de fumage, calculée en utilisant l'équation (4), la différence de $(U5 - U10)(t)$ étant la différence de potentiels mesurés par les moyens de calcul 30 de la figure 6 entre les points B1 et B2 ;

- l'estimation de l'approximation $U10_{TH}(t)$ aux bornes de l'élément chauffant 10 en l'absence d'inhalation pendant ladite période de fumage,

- l'intensité F de l'inhalation correspondant à l'intégration de la différence entre $U10_{MES}(t)$ et $U10_{TH}(t)$ pendant la période de fumage.

Description d'un troisième mode de réalisation de l'invention en option A

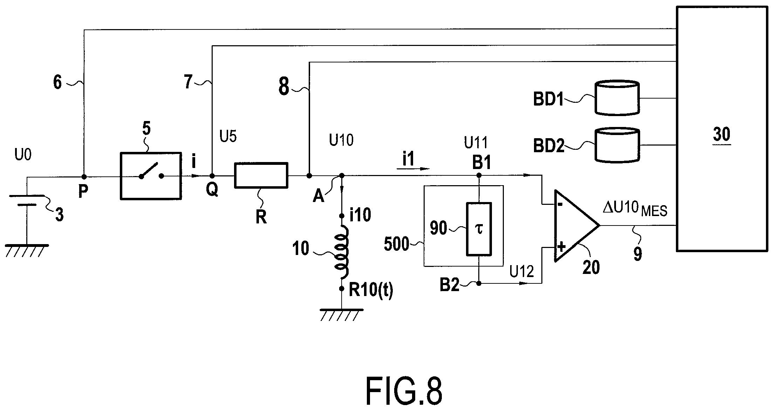

Dans un troisième mode de réalisation en option A représenté à la figure 8, pour estimer la variation $\Delta U_{MES}10(t)$ de la tension aux bornes de l'élément chauffant 10, on effectue, comme pour le premier mode de réalisation, la différence entre deux tensions $U12(t)$ et $U11(t)$ aux bornes B1 et B2 d'un circuit 500, chacune de ces tensions donnant une approximation de la tension aux bornes de l'élément chauffant (10) à des instants légèrement décalés dans le temps.
Dans ce mode de réalisation, on utilise, pour générer ce retard, un circuit 500 constitué par une ligne de retard 90 entre les points de mesure des tensions U11(t) et U12(t).

Cette ligne de retard peut par exemple être constituée par :

- une grande capacité ;
- un convertisseur analogique numérique couplé à un convertisseur numérique analogique.

Les caractéristiques intrinsèques de la ligne de retard 90 ne sont pas perturbées par les inhalations.

Description d'un quatrième mode de réalisation de l'invention en option A

Dans un quatrième mode de réalisation de l'invention en option A, on peut aussi estimer la variation $\Delta U_{MES}10(t)$ de la tension aux bornes de l'élément chauffant 10, en calculant la dérivée par rapport au temps de la tension mesurée $\Delta U_{MES}10(t)$, comme dans le premier mode de réalisation en option B, avec le moyens de calcul 30 de la figure 6 entre les points B1 et B2.

Cette valeur peut être comparée avec la variation théorique $\Delta U_{TH}10(t)$ de la tension aux bornes de l'élément chauffant 10 en l'absence d'inhalation, comme dans le premier mode de réalisation en option A.

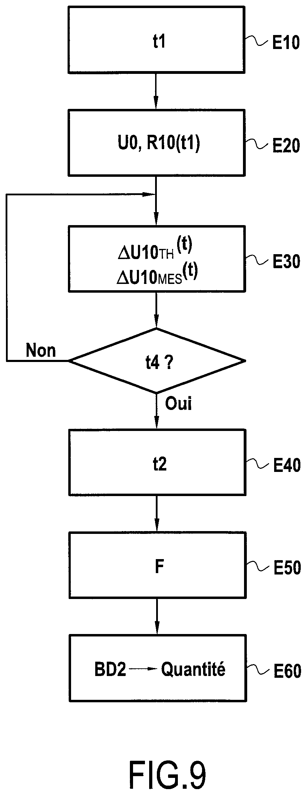

La figure 9 représente sous forme d'organigramme un procédé d'estimation de la quantité de substrat vaporisée conforme à un mode particulier de réalisation de l'invention.

Ce procédé peut par exemple être mis en oeuvre par les moyens de calcul 30 de la cigarette électronique de la figure 1.

Au cours d'une étape E10, les moyens de calcul 30 détectent l'appui sur le bouton entraînant la fermeture de l'interrupteur 5. L'instant t1 de cette détection est enregistré en mémoire.

Au cours d'une étape E20, juste après cette détection, les moyens de calcul 30 mesurent la tension U0 délivrée par la batterie 3 et la résistivité R10(t1) de l'élément chauffant.

Toutes les 20ms, au cours d'une étape E30, jusqu'à l'instant t4 de détection de la relâche du bouton entraînant l'ouverture de l'interrupteur 5, les moyens de calcul 30 :

- mesurent $\Delta U10_{MES}$ (t) (potentiel de la borne 9) ;
- estiment $\Delta U10_{TH}(t)$ par lecture de la première base de données BD1 entre t1 et t1+800ms. Entre t1+800ms et t4, ils estiment $\Delta U10_{TH}$ (t) = 0.

Au cours d'une étape E40, les moyens de calcul 30 estiment l'instant t2 du début de la bouffée, cet instant étant le premier instant après t1 tel que | $\Delta U10_{MES}$ (t2) - $\Delta U10_{TH}$ (t2) | > $S_{T2}$.

Au cours d'une étape E50, les moyens de calcul 30 calculent l'intensité F de l'inhalation comme l'intégration de la différence entre $\Delta U10_{MES}$ (t) et $\Delta U10_{TH}$ (t) entre t2 et t4.

Au cours d'une étape E60, les moyens de calcul 30 estiment la quantité de substrat vaporisé entre t2 et t4 en interrogeant la deuxième base de données B2.

## Revendications

1. Procédé d'estimation de la quantité de substrat vaporisée par un élément chauffant (10) dans une cigarette électronique (1) pendant une période de fumage, **caractérisé en ce qu'**il comporte :

   - une étape (E30) de mesure d'une approximation ($\Delta U10_{MES}(t)$, $U10_{MES}(t)$) d'une caractéristique de la tension (U10(t)) aux bornes de l'élément chauffant (10) pendant cette période de fumage, ladite approximation étant mesurée aux bornes (B1, B2) d'un circuit (500) dont aucun composant ne présente des caractéristiques intrinsèques perturbées par les inhalations ;
   - une étape (E30) d'estimation d'une approximation ($\Delta U10_{TH}(t)$, $U10_{TH}(t)$) de ladite caractéristique de la tension (U10(t)) aux bornes de l'élément chauffant (10) en l'absence d'inhalation pendant ladite période de fumage ;
   - une étape (E50) de calcul d'une intensité (F) des inhalations pendant ladite période de fumage à partir d'une intégration de la différence entre lesdites approximations pendant ladite période de fumage ; et
   - une étape (E60) d'estimation de ladite quantité de substrat vaporisée par l'élément chauffant au moins à partir de ladite intensité ;

   procédé en lequel la caractéristique de ladite tension (U10(t)) à un instant donné est, en option (A), une variation ($\Delta U10(t)$) de ladite tension à cet instant ou, en option (B), la tension mesurée aux bornes d'une résistance de mesure (R) connectée en série avec ledit élément chauffant (10).

**2.** Procédé d'estimation selon la revendication 1, option (A), dans lequel l'approximation ($\Delta U10_{MES}(t)$) de la variation de la tension ($U10(t)$) aux bornes de l'élément chauffant est calculée à partir de tensions ($U12(t)$, $U11(t)$) mesurées aux bornes d'au moins deux éléments, les tensions aux bornes de chacun desdits éléments donnant une approximation de la tension aux bornes dudit élément chauffant (10) à des instants légèrement décalés dans le temps.

**3.** Procédé d'estimation selon la revendication 2, option (A), dans lequel lesdits éléments (11, 12) sont des circuits RC série connectés en série.

**4.** Procédé d'estimation selon la revendication 1, option (A), dans lequel l'approximation ($\Delta U10_{MES}(t)$) de la variation de la tension ($U10(t)$) aux bornes de l'élément chauffant est la dérivée par rapport au temps d'une différence de potentiels mesurée aux bornes d'une résistance de mesure (R) connectée en série avec ledit élément chauffant (10).

**5.** Cigarette électronique (1) comportant un élément chauffant (10) apte à vaporiser un substrat pendant une période de fumage, **caractérisée en ce qu'**elle comporte :

- des moyens (30) de mesure d'une approximation ($\Delta U10_{MES}(t)$, $U10_{MES}(t)$) d'une caractéristique de la tension ($U10(t)$) aux bornes de l'élément chauffant (10) pendant cette période de fumage, ladite approximation étant mesurée aux bornes (B1, B2) d'un circuit (500) dont aucun composant ne présente des caractéristiques intrinsèques perturbées par les inhalations ;
- des moyens (30) d'estimation d'une approximation ($\Delta U10_{TH}(t)$, $U10_{TH}(t)$) de ladite caractéristique de la tension ($U10(t)$) aux bornes de l'élément chauffant (10) en l'absence d'inhalation pendant ladite période de fumage ;
- des moyens (30) de calcul d'une intensité (F) des inhalations pendant ladite période de fumage à partir d'une intégration de la différence entre lesdites approximations pendant ladite période de fumage ; et
- des moyens (30) d'estimation de ladite quantité de substrat vaporisée par l'élément chauffant au moins à partir de ladite intensité ;

cigarette dans laquelle la caractéristique de ladite tension ($U10(t)$) à un instant donné est, en option (A), une variation ($\Delta U10(t)$) de ladite tension à cet instant ou, en option (B), la tension mesurée aux bornes d'une résistance de mesure (R) connectée en série avec ledit élément chauffant (10).

**6.** Cigarette électronique selon la revendication 5, option (A), dans laquelle ladite cigarette électronique comporte :

- au moins deux éléments, la tension aux bornes de chacun desdits éléments donnant une approximation de la tension aux bornes dudit élément chauffant (10) à des instants légèrement décalés dans le temps, et
- des moyens pour mesurer une approximation ($\Delta U10_{MES}(t)$) de la variation de la tension ($U10(t)$) aux bornes de l'élément chauffant à partir des tensions ($U12(t)$, $U11(t)$) mesurées aux bornes desdits éléments.

**7.** Cigarette électronique selon la revendication 6, option (A), dans laquelle lesdits circuits (11, 12) sont des circuits RC série connectés en série.

**8.** Cigarette électronique selon la revendication 5, option (A), dans laquelle ladite cigarette électronique comporte des moyens de calcul (30) aptes à mesurer une différence de potentiels aux bornes d'une résistance de mesure (R) connectée en série avec l'élément chauffant (10), et des moyens pour mesurer une approximation ($U10_{MES}(t)$) de la variation de la tension ($U10(t)$) aux bornes de l'élément chauffant à partir de ladite différence de potentiels.

**Patentansprüche**

**1.** Schätzverfahren der Menge an Substrat, die durch ein Heizelement (10) in einer elektronischen Zigarette (1) während einer Rauchperiode verdampft wird, **dadurch gekennzeichnet, dass** es Folgendes umfasst:

- einen Schritt (E30) eines Messens einer Annäherung ($\Delta U10_{MES}(t)$, $U10_{MES}(t)$) einer Charakteristik der Spannung ($U10(t)$) an den Anschlüssen des Heizelements (10) während dieser Rauchperiode, wobei die Annäherung an den Anschlüssen (B1, B2) einer Schaltung (500) gemessen wird, wovon der keine Komponente intrinsische Charakteristiken aufweist, die durch Inhalation gestört werden;
- einen Schritt (E30) eines Schätzens einer Annäherung ($\Delta U10_{TH}(t)$, $U10_{TH}(t)$) der Charakteristik der Spannung ($U10(t)$) an den Anschlüssen des Heizelements (10) bei Abwesenheit von Inhalation während der Rauchperiode;
- einen Schritt (E50) eines Berechnens einer Intensität (F) der Inhalationen während der Rauchperiode anhand einer Integration der Differenz zwischen den Annäherungen während der Rauchperiode; und
- einen Schritt (E60) eines Schätzens der Menge an Substrat, die durch das Heizelement verdampft wird, zumindest anhand der Intensität;

Verfahren, bei dem die Charakteristik der Spannung (U10(t)) zu einem gegebenen Zeitpunkt optional (A) eine Änderung ($\Delta$U10(t)) der Spannung zu diesem Zeitpunkt, oder, optional (B), die Spannung ist, die an den Anschlüssen eines Messwiderstands (R) gemessen wird, der in Reihe mit dem Heizelement (10) geschaltet ist.

2. Schätzverfahren nach Anspruch 1, Option (A), wobei die Annäherung ($\Delta$U10$_{MES}$(t)) der Änderung der Spannung (U10(t)) an den Anschlüssen des Heizelements anhand Spannungen (U12(t), U11(t)) berechnet wird, die an den Anschlüssen von mindestens zwei Elementen gemessen wird, wobei die Spannungen an den Anschlüssen von jedem der Elemente eine Annäherung der Spannung an den Anschlüssen des Heizelements (10) zu leicht zeitversetzten Zeitpunkten ergeben.

3. Schätzverfahren nach Anspruch 2, Option (A), wobei die Elemente (11, 12) in Reihe geschaltete RC-Serienschaltungen sind.

4. Schätzverfahren nach Anspruch 1, Option (A), wobei die Annäherung ($\Delta$U10$_{MES}$(t)) der Änderung der Spannung (U10(t)) an den Anschlüssen des Heizelements die Ableitung einer Potentialdifferenz, die an den Anschlüssen eines Messwiderstands (R) gemessen wird, der in Reihe mit dem Heizelement (10) geschaltet ist, bezogen auf die Zeit ist.

5. Elektronische Zigarette (1), umfassend ein Heizelement (10), das geeignet ist, um während einer Rauchperiode ein Substrat zu verdampfen, **dadurch gekennzeichnet, dass** es Folgendes umfasst:

- Einrichtungen (30) zum Messen einer Annäherung ($\Delta$U10$_{MES}$(t), U10$_{MES}$(t)) einer Charakteristik der Spannung (U10(t)) an den Anschlüssen des Heizelements (10) während dieser Rauchperiode, wobei die Annäherung an den Anschlüssen (B1, B2) einer Schaltung (500) gemessen wird, wovon keine Komponente intrinsische Charakteristiken aufweist, die durch Inhalation gestört werden;
- Einrichtungen (30) zum Schätzen einer Annäherung ($\Delta$U10$_{TH}$(t), U10$_{TH}$(t)) der Charakteristik der Spannung (U10(t)) an den Anschlüssen des Heizelements (10) bei Abwesenheit von Inhalation während der Rauchperiode;
- Einrichtungen (30) zum Berechnen einer Intensität (F) der Inhalationen während der Rauchperiode anhand einer Integration der Differenz zwischen den Annäherungen während der Rauchperiode; und
- Einrichtungen (30) zum Schätzen der Menge an Substrat, die durch das Heizelement verdampft wird, zumindest anhand der Intensität;

Zigarette, bei der die Charakteristik der Spannung (U10(t)) zu einem gegebenen Zeitpunkt, bei Option (A), eine Änderung ($\Delta$U10(t)) der Spannung zu diesem Zeitpunkt ist, oder, bei Option (B), die Spannung, die an den Anschlüssen eines Messwiderstands (R) gemessen wird, der in Reihe mit dem Heizelement (10) geschaltet ist.

6. Elektronische Zigarette nach Anspruch 5, Option (A), wobei die elektronische Zigarette Folgendes umfasst:

- mindestens zwei Elemente, wobei die Spannung an den Anschlüssen von jedem dieser Elemente eine Annäherung der Spannung an den Anschlüssen des Heizelements (10) zu leicht zeitversetzten Zeitpunkten ergibt, und
- Einrichtungen zum Messen einer Annäherung ($\Delta$U10$_{MES}$(t)) der Änderung der Spannung (U10(t)) an den Anschlüssen des Heizelements anhand der Spannungen (U12(t), U11(t)), die an den Anschlüssen der Elemente gemessen werden.

7. Elektronische Zigarette nach Anspruch 6, Option (A), wobei die Schaltungen (11, 12) in Reihe geschaltete RC-Reihenschaltungen sind.

8. Elektronische Zigarette nach Anspruch 5, Option (A), wobei die elektronische Zigarette Berechnungseinrichtungen (30), die geeignet sind, um eine Potentialdifferenz an den Anschlüssen eines Messwiderstands (R) zu messen, der mit dem Heizelement (10) in Reihe geschaltet ist, und Einrichtungen zum Messen einer Annäherung (U10$_{MES}$(t)) der Änderung der Spannung (U10(t)) an den Anschlüssen des Heizelements anhand der Potenzialdifferenz umfasst.

**Claims**

1. A method of estimating the amount of substrate vaporised by a heating element (10) in an electronic cigarette (1) during a smoking period, **characterised in that** it comprises:

   - a step (E30) of measuring an approximation ($\Delta U10_{MES}(t)$, $U10_{MES}(t)$) of a characteristic of the voltage ($U10(t)$) across the heating element (10) during that smoking period, said approximation being measured across the terminals (B1, B2) of a circuit (500) of which no component has intrinsic characteristics disturbed by the inhalations;
   - a step (E30) of estimating an approximation ($\Delta U10_{TH}(t)$, $U10_{TH}(t)$) of said characteristic of the voltage ($U10(t)$) across the heating element (10) in the absence of inhalation during said smoking period;
   - a step (E50) of calculating an intensity (F) of inhalations during said smoking period from an integration of the difference between said approximations during said smoking period; and
   - a step (E60) of estimating said amount of substrate vaporised by the heating element at least from said intensity;

   method in which the characteristic of said voltage ($U10(t)$) at a given instant is, optionally (A), a variation ($\Delta U10(t)$) of said voltage at that instant or, optionally (B), the voltage measured across a measuring resistor (R) connected in series with said heating element (10).

2. An estimation method according to claim 1, option (A), wherein the approximation ($\Delta U10_{MES}(t)$) OF the variation of the voltage ($U10(t)$) across the heating element is calculated from voltages ($U12(t)$, $U11(t)$) measured across at least two elements, the voltages across each of said elements approximating the voltage across said heating element (10) at slightly staggered times.

3. The estimation method according to claim 2, option (A), wherein said elements (11, 12) are series connected RC circuits.

4. The estimation method according to claim 1, option (A), wherein the approximation ($\Delta U10_{MES}(t)$) OF the variation of the voltage ($U10(t)$) across the heating element is the derivative of a potential difference measured across a measuring resistor (R) connected in series with said heating element (10).

5. An electronic cigarette (1) comprising a heating element (10) adapted to vaporise a substrate during a smoking period, **characterised in that** it comprises:

   - means (30) for measuring an approximation ($\Delta U10_{MES}(t)$, $U10_{MES}(t)$) of a characteristic of the voltage ($U10(t)$) across the heating element (10) during that smoking period, said approximation being measured across the terminals (B1, B2) of a circuit (500) of which no component has intrinsic characteristics disturbed by inhalations;
   - means (30) for estimating an approximation ($\Delta U10_{TH}(t)$, $U10_{TH}(t)$) of said characteristic of the voltage ($U10(t)$) across the heating element (10) in the absence of inhalation during said smoking period;
   - means (30) for calculating an intensity (F) of inhalations during said smoking period from an integration of the difference between said approximations during said smoking period; and
   - means (30) for estimating said amount of substrate vaporised by the heating element at least from said intensity;

   in which the characteristic of said voltage ($U10(t)$) at a given instant is, optionally (A), a variation ($\Delta U10(t)$) of said voltage at that instant or, optionally (B), the voltage measured across a measuring resistor (R) connected in series with said heater (10).

6. The electronic cigarette of claim 5, option (A), wherein said electronic cigarette comprises:

   - at least two elements, the voltage across each of said elements approximating the voltage across said heating element (10) at slightly different times, and
   - means for measuring an approximation ($\Delta U10_{MES}(t)$) of the variation of the voltage ($U10(t)$) across the heating element from the voltages ($U12(t)$, $U11(t)$) measured across said elements.

7. An electronic cigarette according to claim 6, option (A), wherein said circuits (11, 12) are series connected RC circuits.

8. Electronic cigarette according to claim 5, option (A), wherein said electronic cigarette comprises calculating means (30) adapted to measure a potential difference across a measuring resistor (R) connected in series with the heating element (10), and means for measuring an approximation ($U10_{MES}(t)$) of the variation of the voltage ($U10(t)$) across the heating element from said potential difference.

FIG.1

EP 3 108 223 B1

FIG.2

FIG.3

EP 3 108 223 B1

FIG.4

FIG.5

FIG.6

FIG.7

EP 3 108 223 B1

FIG.8

FIG.9

**EP 3 108 223 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2468116 A
- EP 2143346 A1
- EP 2143346 A